# EUROPEAN PATENT SPECIFICATION

(11) **EP 3 058 261 B1**
(45) Date of publication and mention of the grant of the patent: **06.12.2017**
(21) Application number: 14786207.2
(22) Date of filing: 20.10.2014
(51) Int. Cl.: F16L 5/04, A62C 2/06

(54) **A PIPE TRANSIT SYSTEM**
ROHRTRANSITSYSTEM
SYSTÈME DE PASSAGE DE TUYAU

(30) Priority: 18.10.2013 NL 1040459
(43) Date of publication of application: 24.08.2016
(73) Proprietor: Beele Engineering B.V., 7122 NZ Aalten (NL)
(72) Inventor: BEELE, Johannes Alfred, NL-7122 NZ Aalten (NL)
(74) Representative: Hoffmann Eitle
(86) International application number: PCT/EP2014/072414
(87) International publication number: WO 2015/055855

(56) References cited:
- EP-A1- 0 964 196
- EP-A1- 2 418 410
- EP-A2- 1 847 747
- WO-A1-2008/023058
- WO-A1-2009/090247
- DE-U1- 7 708 367
- JP-A- 2011 163 553
- JP-U- H0 274 686
- US-A- 3 914 843
- US-A1- 2003 192 269
- Beele Engineering Bv: "NOFIRNO, SEALING SYSTEM FOR PIPE & MULTI-ALL-MIX TRANSITS", , 31 March 2010 (2010-03-31), pages 1-34, XP055131320, Retrieved from the Internet: URL:http://www.csd.us.com/uploads/document s/NOFIRNO%20Pipe%20Catalog%20Marine%20Marc h%202010.pdf [retrieved on 2014-07-24]

## Description

### Introduction

The invention is related to a thermally expandable "fire-stop" system for placement in a rigid and preferably thermally stable conduit having an inner wall defining an inner space through which a single pipe or a single bundle of pipes extends, or will extend. Such a conduit is often of metal. However, in on-shore constructions, the conduit may, for instance, also be formed by a channel in a concrete wall. It is not even fully inconceivable that such a conduit is of a hard plastic which does not soften upon exposure to heat. A pipe may be of a, relatively, thermally weakenable material, such as plastic. However, it may also be that one or more pipes are of a metal, such as steel.

### Background of the invention

Conduits are normally incorporated in a construction element that divides, for instance, two compartments. Such a construction element may also be referred to as a partition. A pipe may extend through the conduit from one of the two compartments into the other. These conduits are often referred to as pipe penetrations or pipe transit systems. Such a conduit is often present in constructions formed on the basis of civil engineering. Factories, buildings, drainage systems, tunnels, subways, etc. all comprise such penetrations. However, also constructions formed on the basis of nautical engineering do comprise such conduits. One finds them on board of vessels and/on other offshore applications such as oil rigs.

These penetrations are seen as unwelcome necessities in such a construction. Pipes for, for instance, water distribution and water wastage systems, air-conditioning systems, hydraulic and pneumatic control, sprinklers etc but also for transport of gas, or oil, need to be extending throughout such a construction, even though this entails introducing weak spots in a separation of the compartments.

Such weak spots do not manifest themselves to a great extent in the mechanical strength of the construction but much more in the possibility of undesired transport of physical phenomena throughout the structure.

An example of such phenomena is a fire which needs to be confined, as long as possible, to only one area. This is important not only to allow for control and extinguishing the fire, but also to provide time for people present in compartments near to the fire for reaching a safe distance from the fire before it further expands. Spreading of the fire is ideally fully blocked, or measures are in place to ensure that it can only spread in a very slow fashion. To prevent smoke and/or fire from passing through the conduit from one compartment to another, the conduit is usually provided with a material that closes the conduit, at least for some time, when the conduit is exposed to heat due to a nearby fire.

Another form of transport that needs to be prevented is the supply of air to a fire which takes place in a compartment. Particularly for on-shore constructions, it is believed that fire is fed with oxygen as supplied through burned-out conduits and that it spreads itself rapidly throughout a multi-storey building when transport of air can freely occur between different levels of compartments. It is also for this reason desirable that a conduit is automatically closed off, when on one side of the conduit a fire takes place.

Although above reference is made to a construction element having a conduit and dividing two compartments, it is also possible that a construction element separates a compartment from the surrounding environment. It is thus possible that one side of the construction element is exposed to atmospheric conditions.

It will be appreciated that a pipe extending through a conduit, the conduit itself and the construction element into which the conduit is incorporated, may each be made of a material that allows for the conduction of heat. The efficiency for conducting heat depends on the type of material and the dimensions of that material. In principle, heat can in such a situation be supplied to the inner space of the conduit via at least two different routes. The first route is via the pipe extending through the conduit and the second route to the inner space of the conduit is via the material out of which the conduit itself is made. As in offshore constructions and vessels, partitions and conduits are usually made of metal, i.e. a good heat-conducting material, heat is usually rapidly supplied to the inner space of the conduit via the second route. Of course, heat may also predominately or exclusively be applied to the inner space of the conduit via the first route, in a situation where the partition is for instance a concrete wall and the conduit is formed by a through-hole in that wall.

Further below, the background of the invention is discussed in relation to the material of the pipe which will be extending through the conduit to be sealed. Toward the end of this section the background in relation to metal pipes will be discussed. First though, the situation will be discussed for plastic pipes.

There is a strong tendency in both the offshore and the on-shore construction industry to make pipes, in particular pipes of so-called service systems as referred to above, of a plastic material such as for instance PVC, PP-R, ABS and HDPE. Relative to aluminium or metal pipes, such plastic pipes offer an enormous reduction in weight, clearly advantageous in shipbuilding. As known, plastics are not susceptible and do not contribute to corrosion, advantageous in both the offshore and on-shore construction industry. Such plastic pipes are observed to suffer much less from sedimentation in the pipes, particularly when compared to steel pipes, giving plastic pipes advantages in waste water installations. On exposure to heat, however, such plastic pipes may weaken, i.e. become soft, and are therefore further in this specification referred to, as made of a thermally weakenable or a thermally softenable material, or in short as thermally weakenable pipes. The phrase thermally weakenable material refers thus in general to materials comprising or consisting of plastic. However, it is envisagable that also pipes made of or made with fibreglass form thermally weakenable material and these are therefore equally embraced by the term thermally weakenable pipes.

It will be clear that such weakening of the pipe will occur more rapidly in a conduit which is made of metal and incorporated in a metal construction element or partition. The conduit will then act as a kind of oven surrounding the pipe of the weakenable material, leading to local collapse of the pipe. However, a heated inner wall of a through-hole in a stone or concrete wall which is exposed to a fire, may equally act like an oven, even though the heating-rate will in that case be different than the heating-rate for "the metal oven". A stone or concrete wall will absorb much more heat and is a poor conductor of heat. The second route for the supply of heat into the conduit is in that case therefore much less effective. In such a situation it may well be that the first route, i.e. transport of heat into the conduit via the pipe itself, is by far the most dominant route if not effectively the only one, even though the pipe may be of plastic.

It is common practice to seal the space between a conduit and a pipe as extending through the conduit, with a sealing system. Such a sealing system may provide sealing capacities before exposure to heat, and may for instance seal such that gas and/or water cannot penetrate through the annular space between the pipe and the conduit.

In particular for conduits through which a single pipe of a thermally weakenable material extends, advanced sealing systems have been developed. Reference is made to EP 1200759 A1 of the same inventor, describing so-called "crusher plugs" . At each end of the conduit is a plug inserted in the annular space between the conduit and the pipe extending to the conduit. The crusher plug is made of a thermally expandable material. Upon exposure to heat, the crusher plug expands. However, as the conduit is of a relatively rigid material, expansion in radial direction is only possible radially inwards. As upon the exposure to heat the thermally weakenable pipe has started weakening, the radial inward expansion of the plug crushes the pipe further and therewith closes the pipe off, as well as the complete conduit. The use of such plugs is very advantageous for conduits through which a single pipe extends, as the annular space which needs to be shut off by the plug is very well defined.

WO 2006/097290, also of the present inventor, discloses a conduit through which a plurality of pipes extends. For sealing that conduit a system is described that comprises a multitude of heat expandable rubbery sleeves. The sleeve material is made heat expandable by incorporation of heat expandable graphite into the rubbery material. Such a sleeve is also referred to as a filler sleeve. Usually, the sleeve is easily bendable, soft, and has relatively poor mechanical properties. This makes the sleeves perfect for inserting in a conduit and therewith filling the conduit. The sleeves are applied in a fashion parallel to each other and parallel to the pipe. The system further comprises a fire-resistant and/or watertight sealant. The sealant is applied against the ends of the sleeves and forms a sealing layer that seals off the conduit.

A system as described in WO 2006/097290 is usually applied in a conduit which is very large in cross-section relative to the cross-section of the pipe extending through the conduit. The main reason for this is that there has to be enough space in the conduit for filling the conduit with the heat expandable rubber sleeves, so that these heat expandable devices are during expansion in radial (transverse) direction capable of closing the conduit fully off. As there is space between the filler sleeves as well as in each empty sleeve, thermal expansion can freely occur in the radial (transverse) direction as soon as the temperature in the conduit reaches a point from where the thermally expandable rubber material will expand.

Although there is in axial (longitudinal) direction per unit of length between the sealant layers, no space for expansion available, and the expansion is expected to be larger in axial direction than in radial direction given the amount of heat expandable material that is axially aligned, the expansion of the filler sleeves is initially still predominantly radially oriented.

Without wishing to be bound by any theory this is thought to be a result of three factors. Firstly, as soon as thermal expansion occurs, even though at low temperatures and therefore still only to a limited extent, the axially expanding sleeves feel constrained between the sealant layers and start buckling, therewith removing pressure on the inner wall of the sealant layers. Secondly, the expansion will find its way radially given the little resistance the expansion experiences on radially expanding. (Remember, space is available radially, not only due to the space in and between the sleeves, but at higher temperatures also due to the weakening pipe within the conduit). Thirdly, air originally trapped in the conduit and reaching a high pressure due to the raised temperature and volume reduction in the conduit, will at some stage find its way out presumably through small cracks which have become available in the sealant layer without a breaking up of the sealant layer. This escaping of air offers "new volume" made available in the conduit, into which the expanding sleeve layers can expand, whilst staying within the confinement of the conduit and the sealant layers. At some stage, the expanding forces in the conduit as restrained by the sealant layers become so high that the sealant layer breaks. This breaking is then in itself not a problem as the expanded sleeves have sealed off the conduit before the sealant layer breaks.

Currently there is a strong desire to have smaller and shorter conduits, in order to save both weight and space, without compromising sealing capacity both before and during exposure to a fire.

Conduits which are smaller in cross-sectional dimensions do have little capacity for letting the onset of expansion of the filler sleeve material to predominantly take place in radial direction. In such conduits, it is the radial expansion which is constrained. Hence, the expansion will at a much earlier stage attempt to find its way axially, resulting in early breaking of the sealant layer, with a possibility that the sealant layer breaks before the conduit has been fully closed off by the expanding material. In such a situation it is needed to apply instead of a sealant layer a much stronger "structure". In response thereto one applies in practice a plug designed to sustain high pressures rather than a sealant layer. It turns out that a conduit with expandable filler sleeves in the annular gap between the conduit and the pipe extending therethrough, on both ends of the conduit closed off by a deeply inserted plug, effectively allows the filler sleeves to expand radially and close the conduit and pipe fully off.

However, the drive for further reduction of the cross-sectioned area of the conduit relative to the pipe, continues in attempts to save even more space and even more weight.

EP 2203671 describes a thermally expandable fire stop system for placement in a rigid and thermally stable conduit having an inner wall defining an inner space through which a single pipe or a single bundle of pipes extends, or will extend. Each pipe is a, relatively, thermally weakenable pipe. In a (inner) space of the conduit it is provided with a system comprising at least a thermally expandable device which includes at least one component having a non-linear thermal expansion characteristic. The device has surfaces which start melting at a temperature under a lowest end of a temperature range in which the device displays its non-linear expansion characteristic. The surfaces then form a sticky material. The device is made of a rubberlike compound that has been extruded into a predetermined shape. The device is positioned concentrically relative to the inner space for concentrically surrounding the pipe or a single bundle of pipes, and such that before onset of the non-linear thermal expansion of the device, hot gas can from outside the conduit enter a gas entrance space between the device and the inner wall of the conduit, between the outer wall of the pipe or outer walls of the single bundle of pipes and the device, or through the device. The sticky material can subsequently be formed at the surfaces of the device. The device can then firmly fix itself within the conduit, so that expansion in axial direction is inhibited and expansion in radial direction is more facilitated.

Although this device and system function very well, according to a new interpretation of SOLAS (Safety of Life at Sea), Regulation 13, the sealing systems also have to be watertight, not only before but also after exposure to fire. When the thermally expandable device has expanded predominantly radially and crushed the pipe when it became weak due to exposure to the heat, the resulting structure is cooled by water. During and after cooling the conduit should be watertight. This new interpretation of Regulations for the watertight bulkheads in passenger ships is by some certifying bodies fine-tuned into the requirement that the watertight penetrations need to be tested for a period of at least 30 minutes under a hydraulic pressure equal to or greater than that corresponding to the actual location in the vessel in which they are to be installed.

WO 2008/140399 A1 discloses a seal formed of two halves and capable of forming an annular seal having at least one central opening for a pipe or tube when the seal halves are brought together. Between two of such axially aligned seals a layer of intumescent material is placed.

Each seal half has the form of two base parts. The layer of intumescent material has a relatively short axial extension compared to the axial extension of the base parts. Furthermore, the layer of intumescent material is fixed to the respective base part by means of a mechanical positioning via studs in-between the base parts. At the end of the front base part and the rear base part, a front fitting and a rear fitting are arranged, respectively. The form of the studs corresponds with the form of the front and rear fittings. Thus, each stud has the form of half a ring. The fittings are held at the base parts by means of screws. Openings are arranged in the fittings, the base parts, the studs, and the intumescent material to receive the screws. The screws are threaded at their outer ends to cooperate with threaded openings of the rear fitting. The function of the screws cooperating with the fittings is to compress the base part in an axial direction, with maintained accommodation for the uncompressed intumescent material via the mechanical studs in-between the base parts. Thus, the intumescent material will not be compressed as the studs mechanically separate the base parts during compression.

Normally, the intumescent material and the studs have a somewhat smaller outer diameter than the rest of the seal. A gap is also formed on the inside of the intumescent material. Thus the intumescent material is in radial direction thermally insulated as there is no contact with the outer wall of the pipe or tube and there is no contact with the inner wall of the conduit. As a consequence, the intumescent material may be warmed up too late and will only start expanding a relatively long time after the plastic pipe or tube has weakened and collapsed. Such weakening and collapsing will of course to a much greater extent already take place at the side of the sealing which is exposed to the fire. Such collapsing may occur over a relatively large axial length of the pipe or tube so that also the sealing of the side unexposed to the fire may no longer do its sealing job, given the smaller diameter of the pipe or tube. In summary, this system has a lot of problems which negatively influence the likelihood that after a fire the sealing system will still be watertight.

The main problem of this system though is that it has at the time of installation no flexibility in responding to a different plastic pipe, for instance a pipe which starts softening at a relatively low temperature. In such a case, the system should be optimized for a fast response. However, the use of the system, in terms of dimensions of the respective parts is for the axial direction fixed. Also, the type of intumescent material is fixed, and cannot be replaced. Finally, the air gaps concentrically inside and around the intumescent material are "fixed". Due to these problems, response of the system to exposure to heat is far from optimal and the watertightness after a fire is therefore questionable.

On the market are also systems comprising two seals as described above but fully separate from each other and each tightenable, independently of each other. Each of these tightenable seals is put in one end of the conduit, so that each end of the conduit is provided with such a tightenable seal. The seals are relatively short. The arrangement is referred to as a "back-to-back arrangement". An intumescent material is placed so that it will be in-between the seals filling in axial direction a small proportion of the axial length of the cavity formed between the ends of the seals. The intumescent material will be able to expand in an axial direction without any crushing of the pipe or tube. As a consequence of this, also in this arrangement, the pipe or tube may already have weakened or even collapsed before the intumescent material is capable of closing off the conduit.

Thus, also in this arrangement, watertightness after a fire may not be available for a high water pressure.

Apart from the drawbacks mentioned above, the tightenable systems have in general the problem that upon exposure to heat, the parts for tightening may expand up to a point that the sealing integrity is no longer available. Furthermore, in the long run, the systems suffer from problems which are also well known from rubber washers in taps. When a tap is closed too tightly, the rubber washer will be damaged and due to stress relaxation it will permanently deform. Then only a further tightening could again secure the sealing integrity. However, this sealing integrity will immediately deteriorate, again due to stress relaxation. Under circumstances, watertightness is then not even available before a fire takes place.

Having discussed above conduits through which pipes of plastic extend, now attention is directed to conduits through which metal pipes extend that have their ends immediately or close to the conduit. Such pipes are typically part of an air conditioning system. The pipe penetrates via a conduit a partition for connecting up a compartment with the air conditioning system. Such pipe penetrations for metal pipes are normally also provided with a sealing system which comprises at least one sealing device using vulcanized fire resistant rubber and being suitable for sealing in an assembled condition of the system between an inner wall of the conduit and the pipe. An example of such a sealing device is described in WO 2008/104237 A1. That sealing device comprises a number of tubular rubber elements providing in the conduit a support structure which is clampable between the inner wall and the pipe. The sealant is applied against the support structure for sealing of the end of the conduit between the inner wall and the pipe. Each tubular rubber element is made of a fire resistant vulcanized rubber. The sealant is made of a fire resistant polymer which is vulcanizable at room temperature under exposure to humidity. Such a sealing system can absorb shocks, is watertight, and can withstand a nearby fire for a relatively long period of time. However, as the metal pipe has its open ends close to one end of the conduit, a fire close to that end of the conduit could be fed by oxygen transported through the pipe, or could spread through the pipe.

It is one object of the invention to provide a pipe transit for metal pipes which have their open end close to the end of the conduit, in a way that in response to a fire near the open end of the pipe, transport of oxygen through the pipe, or spreading of the fire through the pipe, will not occur.

It is another object of the invention to provide a pipe transit system for plastic pipes in such a way that in assembled condition and after exposure to fire, watertightness is maintained against relatively high water pressures for a relatively long time.

### Summary of the invention

The invention provides a pipe transit system as defined in claim 1. Should fire occur at that side of the conduit, then, in case of a plastic pipe extending through the conduit, the pipe will weaken and the thermally expandable device will then crush that pipe and further seal off the conduit.

For a metal pipe, the thermally expandable device will expand, also into the open end of the pipe and as such block a potential supply of oxygen or a potential spreading of the fire through the pipe.

The flexibility needed for obtaining a "tailor-made" pipe penetration with watertightness before and after exposure to a fire is available. All the parts are and remain unconnected so that exchanging for another part is possible throughout the lifetime of the system and in any case just before installation. The sealings can be optimal for watertightness before a fire occurs.

If an early response upon heating is required, then it will be possible to use a thermally expandable device that starts expanding at relatively low temperatures.

In an embodiment of a pipe transit system according to the invention, the system is configured for hindering expansion of the thermally expandable device in an axial direction outwardly relative to the conduit. As a consequence thereof, expansion in an axial inward direction relative to the conduit will be followed more by the thermally expanding material of the expandable device. This improves the sealing obtained by the thermally expandable device.

In an embodiment of a pipe transit system according to the invention, the conduit is provided with a retainer for retaining the thermally expandable device in the conduit. This is a relatively easily applicable measure for optimizing the desired performance of the thermally expandable device.

In an embodiment of a pipe transit system according to the invention, in an assembled condition of the system, hot air or smoke can enter gaps between the inner wall of the conduit and one of the at least one thermally expandable device and/or gaps between an outer wall of the at least one pipe and one of the at least one thermally expandable device. Advantageously, hot air or smoke which may reach the conduit well before heat conducted by the pipe and/or into which the conduit is positioned, may reach the conduit, so that the thermally expandable device can already heat up and act timely, for instance by melting of the surfaces of the thermally expandable device and then sticking to the pipe and/or an inner wall of the conduit. This method is further, and in more detail, described in WO 2009/090247 A1.

In an embodiment of a pipe transit system according to the invention, the inner wall of the conduit is provided with at least one shoulder for hindering movement in axial direction of one of the at least one of the sealing devices. Such a shoulder could facilitate the correct position of that one sealing device. Furthermore, if well positioned, such a shoulder could also ensure that that sealing device is not pushed out of the sealing by the thermally expanding expandable device and then no longer contributes to the sealing.

In an embodiment of a pipe transit system according to the invention, at least one of the sealing devices elastically expands in transverse direction upon an axially applied pressure. In such a configuration the axially applied pressure can be provided by the thermally expanding expandable device. Under those circumstances, the sealing device will then in a more tighter fashion seal off space between the pipe and an inner wall of the conduit. Thus, under circumstances which require improved sealing, such as when a fire breaks out, the improved sealing is provided. Advantageously, improved sealing remains, also when the fire has been extinguished. Should any water have been used for extinguishing the fire, this water cannot pass the pipe transit. Particularly where high temperatures apply, and thus plastic pipes may weaken or soften, a firmer grip of the sealing device is advantageous for maintaining the sealing integrity. Also where steel pipes are applied, further tightening, improving also the mechanical stability, is provided if and when desired.

In an embodiment of a pipe transit system according to the invention, the conduit is a multi-part conduit having at least a main part for holding the at least one sealing device and a sleeve part that is mountable to the main part for holding one of the at least one thermally expandable device. This has, for instance, the advantage that for one type of conduit, different types of sleeve parts can be provided, taking into account the length needed for optimally performing when exposed to heat of a nearby fire.

In an embodiment, the sum of the axial lengths of the at least one sealing device and the axial lengths of the at least one thermally expandable device corresponds to the axial length of the conduit. This means that the conduit can be as short as needed for the performance of the system when exposed to fire and for reassuring that the system is watertight after fire at a prescribed water pressure.

The invention, and further embodiments thereof, will further be explained with the aid of a drawing, in which:
Fig. 1 shows schematically a first embodiment of a pipe transit system according to the invention;
Fig. 2 shows schematically a second embodiment of a pipe transit system according to the invention;
Fig. 3 shows schematically a third embodiment of a pipe transit system according to the invention;
Fig. 4 shows a part of the third embodiment shown in Fig. 3;
Fig. 5 shows schematically a fourth embodiment of a pipe transit system according to the invention;
Fig. 6 shows schematically a fifth embodiment of a pipe transit system according to the invention;
Fig. 7 shows schematically a construction where the fifth embodiment as shown in Fig. 6 could be placed; and
Fig. 8 shows schematically a set-up for testing before and after exposure to a fire the watertightness of embodiments of a system according to the invention.

In the drawing, like parts have like references.

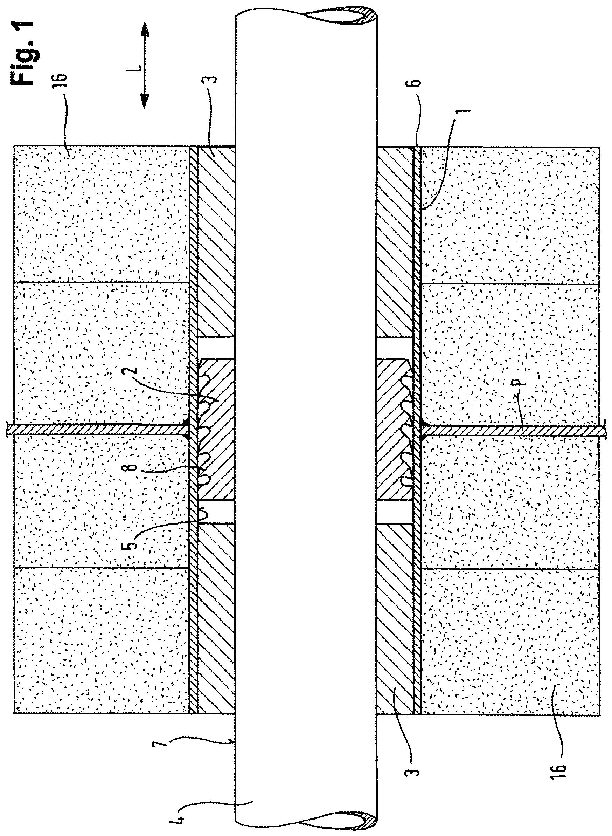

Fig. 1 shows a first embodiment of a pipe transit system according to the invention. The system comprises a conduit 1 having an axial direction L. The system further comprises one or more sealing devices. The embodiment shown in Fig. 1 shows one sealing device 2 positioned in a middle section of the conduit 1. The system further comprises one or more rubberlike thermally expandable devices 3. The embodiment shown in Fig. 1 shows two rubberlike thermally expandable devices 3, one at or toward each end of the conduit 1. As a pipe 4 is extending in axial direction L through the conduit, the conduit 1 itself is suitable for receiving at least one pipe 4. The sealing device 2 comprises vulcanized fire resistant rubber. The system is shown in the assembled condition. The sealing device is suitable for sealing between inner wall 5 of the conduit 1 and the pipe 4. Also shown is that the thermally expandable device 3 is suitable for surrounding in the assembled condition the pipe 4 at a position which is in axial direction L relative to the sealing device 2, at or toward the end 6 of the conduit 1. The rubberlike thermally expandable device 3 preferably comprises material having a component which causes the material on exposure to heat to expand rapidly to an extent which is much more than the extent to which the material not having this component would expand. Such a component may be expandable graphite and/or intercalated graphite, or an equivalent thereof.

The component is preferably such that it causes expansion of the material at the softening temperature of LDPE and/or HDPE. Softening temperatures of LDPE and/or HDPE are amongst the lowest of the softening temperatures of plastics as used for pipes. Thus, a component causing the expansion to occur at such a softening temperature would ensure that the thermally expandable device will start expanding for each and every plastic pipe used in the field, before the pipe has collapsed due to its weakening.

Preferably, the thermally expandable device 3 is such that in an assembled condition of the system, hot air or smoke can enter the gaps between the inner wall 5 of the conduit 1 and the thermally expandable device 3 and/or gaps between an outer wall 7 of the pipe 4 and the thermally expandable device 3. This has the advantage that at a very early stage, before the fire itself reaches the conduit, the thermally expandable device can be heated up. Equally the outer wall 7 of the pipe 4 can be heated up. Thus, both the thermal expansion of the thermally expandable device 3 and the softening of the pipe 4 can start occurring simultaneously. It is also possible that in an assembled condition of the system contact is established between the inner wall 5 of the conduit 1 and one of the thermally expandable devices 3 and/or between an outer wall 7 of the pipe 4, or both of the thermally expandable devices 3. When these contact points are heated up, typically, the thermally expandable device may start melting first and become sticky. It then further fixes itself between the inner wall 5 of the conduit 1 and the outer wall 7 of the pipe 4. Thus, the thermally expandable device will not easily expand itself out of the conduit 1. It will in any case remain fixed between the inner wall 5 of the conduit 1 and the outer wall 7 of the pipe 4.

The thermally expandable device 3 may be a multi-part device. The device 3 may also comprise layers which are concentrically oriented. It is also possible that the device comprises a wrappable device, for instance a length of sheet which can be wrapped around pipe 4, outside the conduit 1 and then placed into the conduit 1. The device may comprise ethylvinylacetate (EVA). Examples of a thermally expandable device that can be used in embodiments of the present invention can be found in WO 2009/090247 A1.

It can be seen in Fig. 1, that sealing device 2 is preferably fully insertable into the conduit 1. Ideally, the sealing device 2 is free from any metal parts for tightening the sealing. Thus, the sealing device 2 provides sealing immediately after insertion into the conduit 1.

Preferably, as also shown, the sealing device 2 comprises a plug, preferably of rubber, more preferably a vulcanized fire resistant rubber. Such a plug may be of silicone based rubber. Further the sealing device 2 may comprise at least two segmental parts so that it can be inserted into conduit 1 after instalment of pipe 4 through conduit 1. As further shown, sealing device 2 may be provided with outer ribs 8 having tops spaced apart in longitudinal direction L for realizing, in use, annular contact surfaces which are closed in itself in a circumferential direction between the sealing device 2 and the inner wall 5 of the conduit 1. Although not visible in Fig. 1, but nevertheless preferable, the sealing device 2 may be provided with inner ribs having tops spaced apart in longitudinal direction L for realizing, in use, annular contact surfaces which are each closed in itself in a circumferential direction between the sealing device 2 and the pipe 4.

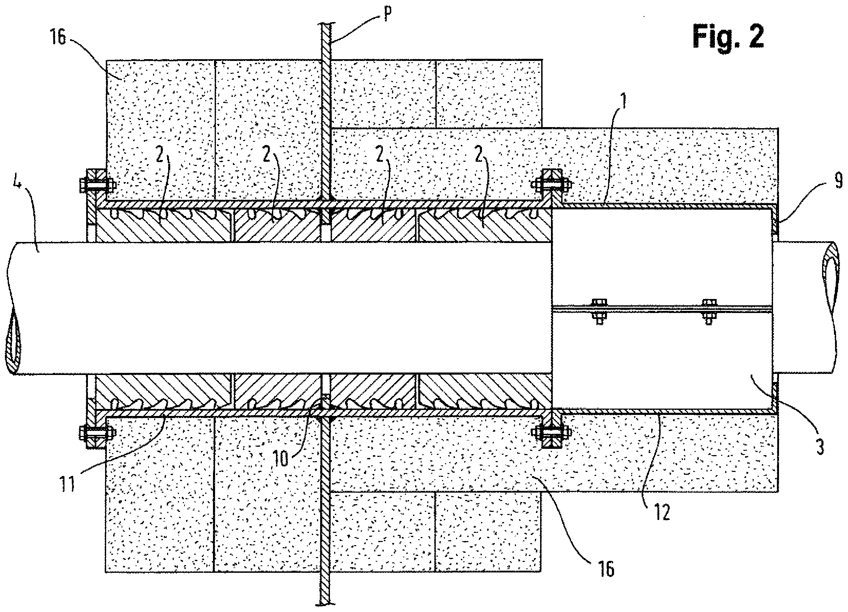

The sealing devices 2, as shown in Figs 1, 2 and 3, are each fully insertable into conduit 1. For that purpose, none of the sealing devices 2 are provided with a flange. For a more detailed description of the sealing devices 2 as shown in Figs. 1, 2 and 3, reference is made to WO 2008/023058 of the present Applicant, particularly Figs. 2-10 of that document. The flangeless plugs are referred to as so-called "DYNATITE" plugs, also commercially available. Such plugs are designed such that the sealing elastically expands in a transverse direction upon axially applied pressure. This results in annular contact surfaces which expand over a larger width, that is in axial direction, as compared with the situation without an axially applied pressure. These annular contact surfaces are present on the inside and outside. An advantage of using these plugs as sealing devices 2 in embodiments of the present invention, is that upon axial pressure applied by the thermally expandable devices 3, the plugs will obtain a firmer grip on the pipe 4. Thus, once the thermally expandable device 3 starts expanding, predominantly in the radial direction but inevitably to some extent in the axial direction, plastic pipe 4 which has become weak due to the raised temperature, is crushed. At the position of this crushing, the diameter of the pipe naturally reduces. Of course, this may also mean that the diameter of the pipe 4 at a position of the sealing device 2 also reduces somewhat in diameter. However, such a change in diameter does not lead to a leakage in the sealing as the sealing device 2, once pressure in axial direction starts, expands a little in a transverse direction and maintains contact with the outer wall of the pipe 2. It has also turned out that after cooling down the pipe transit from high temperature, the pipe 2 tends to shrink a little. Also this shrinkage does not lead to a leak in the sealing, again due to the transverse expansion of the sealing device 2 upon the axially applied pressure by the expanded thermally expandable device 3.

Fig. 2 shows a second embodiment of a pipe transit system according to the invention. The system is shown in the assembled condition. Like the embodiment shown in Fig. 1, there is a conduit having an axial direction L. The system comprises four sealing devices 2. The system comprises one rubberlike thermally expandable device 3. The sealing devices 2 and the thermally expandable device 3 may be as described above when the embodiment shown in Fig. 1 was discussed.

The embodiment shown in Fig. 2 shows a system that is configured for hindering the expansion of the thermally expandable device 3 in an axial direction outwardly relative to the conduit 1. The conduit 1 is provided with a retainer 9 for retaining the thermally expandable device 3 in the conduit 1. This embodiment of the system comprises four sealing devices 2. The inner wall 5 of the conduit 1 is provided with at least one shoulder 10 for hindering movement in the axial direction of the sealing devices 2 into a direction in which those sealing devices were inserted into the conduit 1.

The thermally expandable device 3 surrounds, as shown, in the assembled condition, pipe 4 at a position which is in axial direction L, relative to each of the sealing devices 2, toward the end of the conduit 1.

As shown, preferably the inner wall 5 of the conduit 1 is free from a threshold between a part of the conduit 1 for holding the thermally expandable device 3 and the part of the conduit 1 for holding the sealing devices 2. The conduit 1 is made of a metal or hard engineering plastic which is not thermally softenable. As shown, preferably the conduit 1 is a multi-part conduit having at least a main part 11 for holding the sealing devices 2 and the sleeve part 12 that is mountable to the main part 11 for holding the thermally expandable device 3. The sleeve part 12 preferably comprises two shells which are along an axial direction mountable to each other. In the embodiment shown in Fig. 2, the sleeve part is mountable to the main part by means of bolts and nuts. Equally, the two shells of the sleeve part 12 are mountable to each other by means of bolts and nuts. Instead of bolts and nuts, any other arrangement for mounting may be used for suitably fixing the parts or the shells together.

A transition from the sleeve part 12 to the main part 11 is preferably free from a diameter reducing structure. Although the embodiment shown in Fig. 2 only has at one end of the conduit the thermally expandable device 3, generally speaking, the system is such that in assembled condition it can be symmetrical, an imaginary transverse cross-sectional plane of the conduit 1 being the mirror plane. This plane could, for instance, coincide with partition P in which the conduit is positioned. Such a symmetrical arrangement is particularly advantageous in constructions where the fire could start on either side of the partition P. As it is not known in advance where a fire will occur, it makes sense to have the thermally expandable device on either end of the conduit 1.

When a fire occurs, or when the heat at one end of the conduit 1 is such that the plastic pipe starts to become soft, also the thermally expandable device 3 starts expanding. The expansion is blocked in a radially outward direction as well as in an axially outward direction, that is outward of the conduit. Consequently, the expansion can only take place in a radially inward direction, therewith crushing the plastic pipe, and in an axially inward direction. The sealing devices 2 positioned between the shoulder 10 and the thermally expandable device 3 will experience an axially applied pressure exerted by the expanding thermally expandable device 3, therewith ensuring that the sealing devices 2 will enhance their grip on the outer surface 7 of pipe 4. Even though the diameter of the pipe 7 may at a position of the sealing device 2 be slightly less due to the crushing of the pipe at a position of the thermally expandable device 3, the sealing devices will still perform their sealing function. This response of the sealing devices is described in more detail in WO 2008/023058 of the present Applicant.

Even if the sealing device 2 adjacent the thermally expandable device 3 loses grip on the outer surface 7 of pipe 4, this should not be a problem as the thermally expandable device 3 also expands such that the material enters in a gap potentially formed between the inner ribs of the sealing device 2 and the outer surface 7 of pipe 4. The presence of the sealing device 2 does however also prevent crushing of the pipe 7 at a position of the sealing device. In any case, the sealing device 2 positioned against shoulder 10 will be able to carry out its sealing function between the inner wall 5 of the conduit 1 and the outer wall 7 of the pipe 4, also after fire when the plastic pipe has been crushed and the thermally expandable device has expanded. Even any shrinkage of the plastic pipe after exposure to heat and subsequent cooling by, for instance, water used for extinguishing the fire, will under those circumstances not result in a lack of sealing integrity.

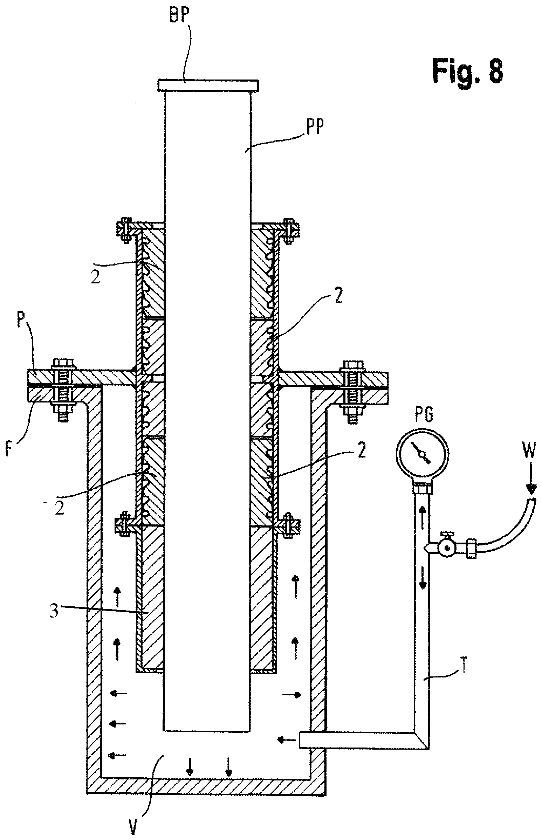

Furthermore, it should be borne in mind that the sealing devices positioned at the other side of the conduit P also still have their sealing function. The embodiment shown in Fig. 2 has been tested extensively and after exposure to fire and cooling down, the watertightness was still such that a water pressure of 4 bar would, for a period of weeks, not show any leakage of water at all. The set-up of this test is further shown in Fig. 8.

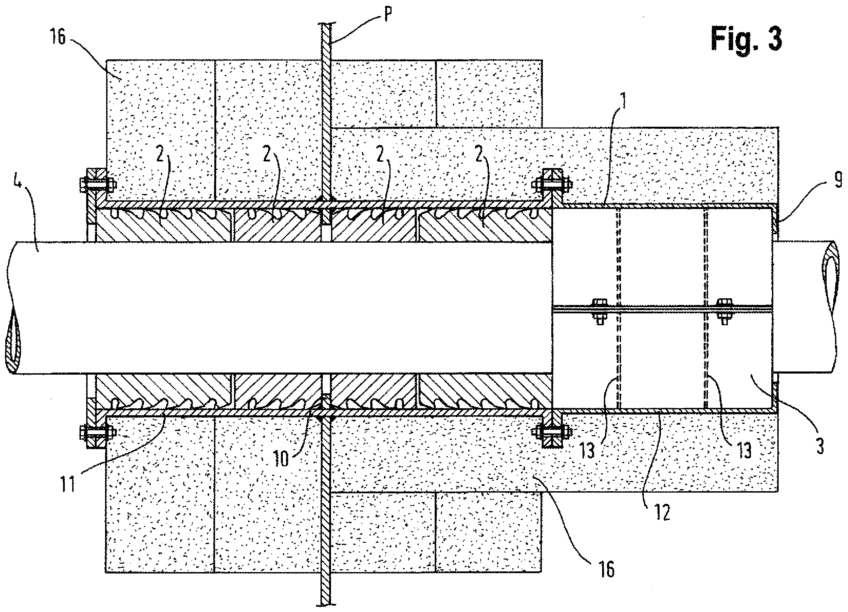

As shown in Figs. 2 and 3, it is preferable that each sealing device 2 is in axial direction L adjacent another sealing device 2. Such a configuration minimalizes the inclusion of air trapped between these two sealing devices. Although air can be a good thermal insulator, once heated up the pressure can become very high and provide a force countering the force generated by the expanding thermally expandable device 3. It applies for the embodiment shown in Figs. 2 and 3 that the conduit 1 defines at least one section for at least one sealing device 2 and at least one thermally expandable device 3. Each section has a length which corresponds to the total length of the sum of the lengths of the number of sealing devices and the length of the number of thermally expandable devices that are in an assembled condition held in that section. Under those circumstances, the inclusion of air is minimal and the pressure generated by heating that bit of air can easily be overcome by the pressure generated by the expanding thermally expandable device 3.

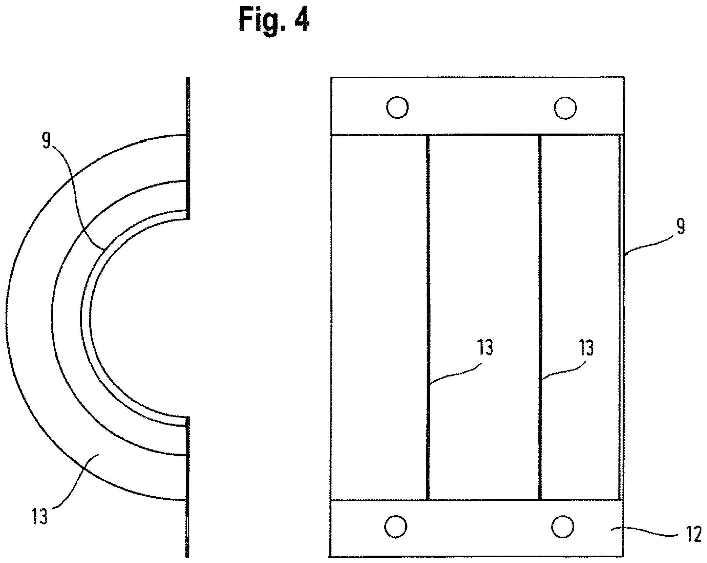

The embodiment shown in Fig. 3 is very similar to the embodiment shown in Fig. 2. However, the sleeve part 12 of the multi-part conduit, as well as the thermally expandable device 3 are different from those shown in Fig. 2. An inner wall of the sleeve part is provided with radially inwardly extending ribs 13 for enhancing contact surfaces and transport of heat into the conduit 1. This is more clearly shown in Fig. 4.

Preferably, the thermally expandable device 3 comprises a part which is provided with grooves for receiving the ribs 13 of the sleeve part 12. It may further be that the thermally expandable device 3 can snugly fit in a cavity formed by the part having the grooves, so that heat can be transferred from the part having the grooves to that other part, and so that an axial expansion inwards the conduit of that other part is not hindered by the ribs 9 in the conduit.

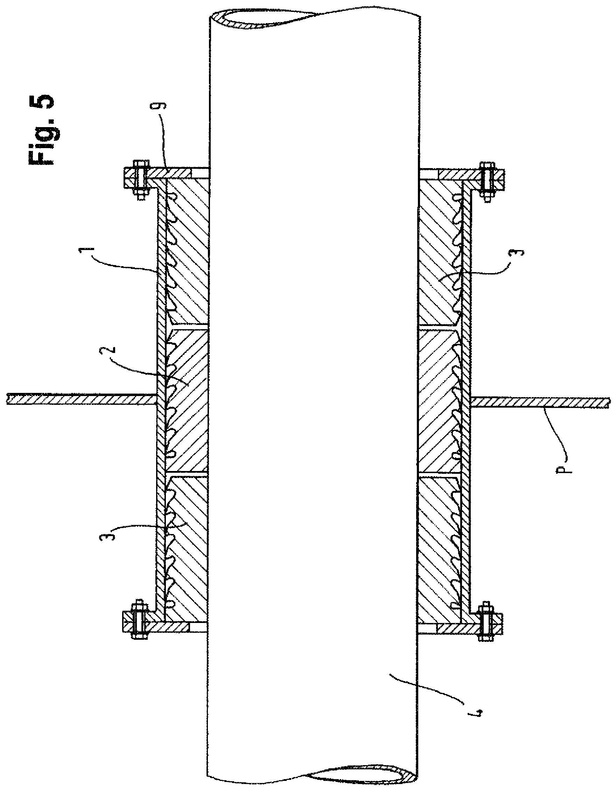

Fig. 5 shows an embodiment in which the thermally expandable device 3 has the shape of a plug, for instance in the shape of the sealing devices 2 as shown in Figs. 1, 2 and 3. For the shape, reference is also here made to WO 2008/023058, particularly Figs. 2-10. For a possible composition of the materials of which these plugs shown in present Fig. 5 are made, reference is made to EP 1200759 A1. However, the thermally expandable device may also be of a material as described in WO 2009/090247. The conduit is shown to have a retainer 9.

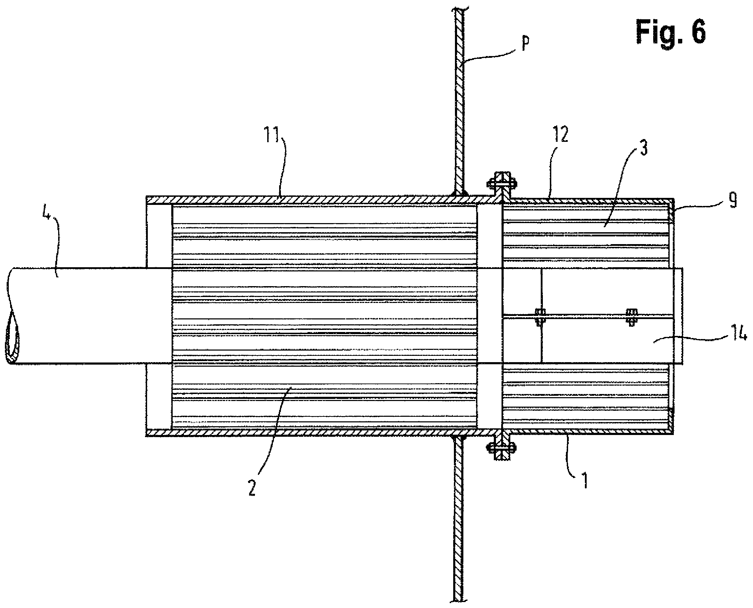

Fig. 6 shows an embodiment of a pipe transit system according to the invention in which sealing device 2 is provided by a number of rubber tubular elements for providing in the conduit a support-structure which is clampable between the inner wall 5 of the conduit 1 and the pipe 4. The sealing device further comprises a sealant for application against the support-structure and for sealing off at the ends of the rubber tubular elements the space between the inner wall 5 of conduit 1 and the pipe 4. Each rubber tubular element is made of a fire-resistant vulcanized rubber of a thermally substantially non-expandable type. The sealant is made of a fire-resistant polymer which is vulcanizable at room temperature under exposure to humidity and which is also a thermally substantially non-expandable type. In this context, rubber or polymer of a thermally substantially non-expandable type comprises rubber respectively polymer which is free from components which upon heating would cause the rubber respectively the polymer to expand to an extent larger than the extent to which the rubber respectively the polymer itself expands on such heating. The rubber may comprise a silicon-based rubber. The polymer may equally comprise a silicon-based polymer.

The sealing device used in the embodiment of Fig. 6 is further described in WO 2008/104237 A1. This embodiment is suitable for a situation wherein the metal pipe has its open end close to the end of the conduit and where the pipe transit system has to be such that in response to a fire near the open end of the pipe, transport of oxygen through the pipe, or spreading of the fire through the pipe, should not occur.

For this embodiment, the conduit 1 is also a multi-part conduit, having at least a main part 11 for holding the sealing device 2 and a sleeve part 12 that is mountable to the main part 11 for holding the thermally expandable device 3. In the embodiment shown, the sleeve part 12 hold the thermally weakenable pipe part 14 for extension of a pipe 4 that in the assembled condition is surrounded by the sealing device 2. The thermally weakenable pipe part 14 is radially surrounded by the thermally expandable device 3. Also for this embodiment it applies that the system is configured for hindering expansion of the thermally expandable device 3 in an axial direction outwardly relative to the conduit. More particularly, the conduit is provided with retainer 9 for retaining the thermally expandable device 3 in the conduit 1. As the sealing device 2 is hardly compressible in axial direction, the thermally expandable device will mainly expand radially, crushing the weakened plastic pipe.

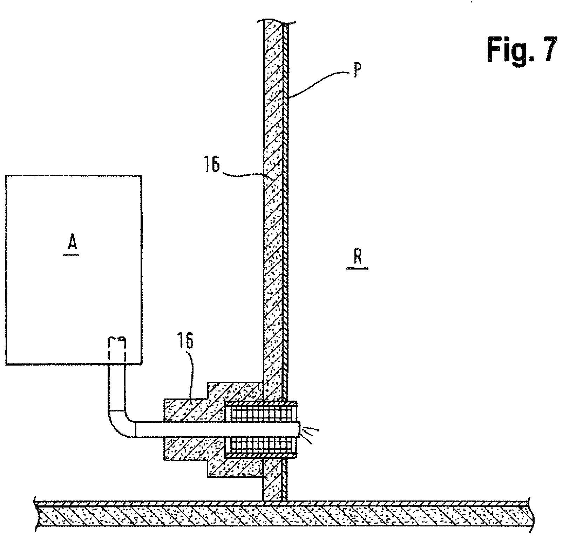

Fig. 7 shows a construction wherein the embodiment shown in Fig. 6 could be used. An air conditioner A could via a metal pipe 4 be connected with room R. The room in which the air conditioner A is positioned and the room R are divided by a partition P. Shown in Fig. 7 is the main part 11 of the multi-part conduit 1. The main part 11 of conduit 1 holds a sealing device 2 as described in WO 2008/104237 A1. However, any other sealing device 2 could equally be employed. Mountable to the end of a main part 11 of conduit 1 is a sleeve part of multi-part conduit 1 for holding the thermally expandable device 3. Preferably, the sleeve part as shown in Fig. 6 is used. Should a fire occur in room R, then the thermally expandable device 3 will crush the thermally weakenable pipe part 14 and form a stop, a sealing, over the end of metal pipe 4 just where it extends into room R. In that way, transport of oxygen through the pipe 4 is blocked. Spreading of the fire through pipe 4 is also no longer possible.

Fig. 8 shows a test unit for testing the watertightness of embodiments of a pipe transit system according to the invention, both before and after exposure to a fire. As shown, a part of the partition T in which the conduit 1 is mounted tightly and sealingly fixed against an upper outward flange F of a vessel V. Water can enter the vessel via a tube T. The water pressure can be measured by a pressure gage PG. Pipe part PP is sealed off by a blind plug BP. With this test set-up it has been shown that the water tightness is maintained for each and every embodiment shown above, when the watertightness as measured before exposure to a fire is compared to the watertightness as measured after exposure to a fire. When pipe P concerned a plastic pipe, i.e. thermally weakenable pipe, the blind plug could be taken off after exposure to a fire. The watertightness was still maintained, at least for 30 minutes up to 1 bar, and for a number of embodiments even up to weeks at a water pressure of 4 bar.

Each of the Figs. 1-3 and 7 further show insulation material 16 applied against the outer wall of the conduit and extending by about 200 mm in a radial direction. Insulation should be applied on both sides as one never knows at which side a fire will take place. With the insulation it is possible to control to some extent the transport of heat into the conduit. For instance, if a metal conduit 1 and the metal wall to which the conduit 1 may have been welded are heated up too fast, then the conduit may heat up due to transport of heat from another position other than the position to or from which the plastic pipe extends. It will then be possible that the conduit very quickly heats up and the plastic pipe extending through the conduit not that quickly. Then the thermally expandable device might be triggered to expand too long before the thermally weakenable pipe becomes soft. Then the conduit is heated up too slowly. Then the pressure in axial direction may be too high and the plugs, if not secured within the conduit by retaining mechanism 9 may be pushed out of the conduit. Also, the other way around is possible. Then the pipe is heated and weakened before the thermally expandable device starts expanding, or the expansion is dependent on the thermal conductivity properties of the pipe.

A person skilled in the art will by routine experience be able to work out the optimal dimensions for the conduit, the plugs, the length of the thermally expandable device and the amount and dimensions of the insulation.

In that respect also the length of the conduit is a parameter which can be explored and optimized for certain situations. Although the drawings show a conduit length of about 250 mm, also shorter conduits can be used in a system according to the present invention.

The invention is not limited to the embodiments shown in the drawing. Many modifications are possible. The sealings 2 can be such that multiple pipes extend through the conduit 1. Plugs which can be used in such embodiments are shown in WO 2004/111513 A1, Figs. 4(a) - 4(e).

The thermally expandable device may also be relatively short, more somewhat like a thermally expandable collar. Also a multitude of such collars may be used so that, effectively, thermally expandable material of a sleeve configuration is used.

Although not shown, it is possible that the inner wall of conduit 1 is provided with a threshold which marks a borderline between a part of the conduit 1 for holding at least one of the thermally expandable devices 3 and a part of the conduit 1 for holding one of the at least two sealings 2. Different combinations of conduits as shown, sealings as shown and thermally expandable devices as shown, are possible.

All such modifications are understood to fall within the framework of the invention as defined by the appended claims.

## Claims

1. A pipe transit system comprising:
a conduit (1) having an axial direction (L);
at least one sealing device (2) which is fully insertable into the conduit; and
at least one rubberlike thermally expandable device (3), the conduit (1) being suitable for receiving at least one pipe (4), the at least one sealing device (2) comprising a vulcanized fire-resistant rubber plug and being suitable for sealing in an assembled condition of the system between an inner wall (5) of the conduit (1) and the at least one pipe (4), the at least one of the sealing devices (2) is provided with outer ribs (8) having tops spaced apart in longitudinal direction for realizing, in use, annular contact surfaces which are each closed in itself in a circumferential direction between the sealing device (2) and the inner wall (5) of the conduit (1), the at least one of the sealing devices (2) is provided with inner ribs having tops spaced apart in longitudinal direction for realizing, in use, annular contact surfaces which are each closed in itself in a circumferential direction between the sealing device (2) and the at least one pipe (4),
the rubberlike thermally expandable device (3) comprises material having a component which causes the material on exposure to heat to expand to an extent which is much more than the extent to which that material not having this component would expand, the thermally expandable device surrounding in the assembled condition the at least one pipe (4) at a position which is in axial direction, relative to at least one of the at least one sealing device (2), at or toward the end (6) of the conduit.

2. A pipe transit system according to claim 1, wherein the system is configured for hindering expansion of the thermally expandable device (3) in an axial direction (L) outwardly relative to the conduit (1).

3. A pipe transit system according to claim 1 or 2, wherein the conduit (1) is provided with a retainer for retaining the thermally expandable device (3) in the conduit (1).

4. A pipe transit system according to claim 1, 2 or 3, wherein in an assembled condition of the system, hot air or smoke can enter gaps between the inner wall (5) of the conduit (1) and one of the at least one thermally expandable device (3) and/or gaps between an outer wall of the at least one pipe (4) and one of the at least one thermally expandable device (3).

5. A pipe transit system according to any one of the previous claims, wherein in an assembled condition of the system, contact is established between the inner wall (5) of the conduit (1) and one of the at least one thermally expandable device (3) and/or between an outer wall (7) of the at least one pipe (4) and one of the at least one thermally expandable device (3).

6. A pipe transit system according to any one of the previous claims wherein the inner wall (5) of the conduit (1) is provided with at least one shoulder (10) for hindering movement in the axial direction of one end of at least one of the sealing devices.

7. A pipe transit system according to any one of the previous claims, wherein at least one of the sealing devices elastically expands in transverse direction upon an axially applied pressure.

8. A pipe transit system according to any one of the previous claims wherein the inner wall (5) of the conduit (1) is free from a threshold between a part of the conduit (1) for holding at least one of the thermally expandable devices (3) and a part of the conduit (1) for holding at least one sealing device (2).

9. A pipe transit system according to any one of the previous claims, wherein the conduit (1) is of metal or a hard engineering plastic which is not thermally softenable.

10. A pipe transit system according to any one of the previous claims, wherein the conduit (1) is a multi-part conduit, having at least a main part (11) for holding the at least one sealing device (2); and a sleeve part (12) that is mountable to the main part for holding one of the at least one thermally expandable device (3).

11. A pipe transit system according to claim 10, wherein the sleeve part (12) comprises two shells which are along an axial direction mountable to each other.

12. A pipe transit system according to claim 10 or 11, wherein a transition from the sleeve part (12) to the main part (11) is free from diameter reducing structures.

13. A pipe transit system according to any one of the previous claims, wherein each sealing device (2) is in axial direction adjacent another sealing device (2).

14. A pipe transit system according to any one of the previous claims, wherein the conduit (1) defines at least one section for at least one sealing device (2) and at least one thermally expandable device (3), each section having a length which corresponds to the lengths of the sum of lengths of the number of sealing devices (2) that are in an assembled condition sealing that section and the length of the number of thermally expandable devices (3) that are in an assembled condition held in that section.

15. A pipe transit system according to any one of the previous claims, wherein the system is such that it can in assembled condition be symmetrical, an imaginary transverse cross-sectional plane of the conduit (1) being the mirror plane.

16. A pipe transit system according to claim 10, wherein the sleeve part (12) holds a thermally weakenable pipe-part for extension of a pipe that is in the assembled condition surrounded by the at least one sealing device (2), the thermally weakenable pipe-part radially being surrounded by one of the at least one thermally expandable device (3).

## Patentansprüche

1. Rohrleitungstransitsystem, umfassend:
ein Rohr (1), das eine axiale Richtung (L) aufweist;
mindestens eine Abdichtvorrichtung (2), die vollständig in das Rohr einführbar ist; und
mindestens eine gummi-artige thermisch expandierbare Vorrichtung (3), wobei das Rohr (1) zur Aufnahme von mindestens einer Rohrleitung (4) geeignet ist, wobei die mindestens eine Abdichtvorrichtung (2) einen vulkanisierten feuerbeständigen Gummistopfen umfasst und zum Abdichten zwischen einer inneren Wand (5) des Rohrs (1) und der mindestens einen Rohrleitung (4) in einem montierten Zustand der Vorrichtung geeignet ist, wobei die mindestens eine der Abdichtvorrichtungen (2) mit äußeren Rippen (8) ausgestattet ist, die Spitzen aufweisen, die in einer longitudinalen Richtung zum Realisieren ringförmiger Kontaktflächen im Einsatz beabstandet sind, die in einer Umgangsrichtung zwischen der Abdichtvorrichtung (2) und der inneren Wand (5) des Rohrs (1) jeweils in sich selbst abgeschlossen sind, wobei die mindestens eine der Abdichtvorrichtungen (2) mit inneren Rippen ausgestattet ist, die Spitzen aufweisen, die in einer longitudinalen Richtung zum Realisieren ringförmiger Kontaktflächen im Einsatz beabstandet sind, die in einer Umfangsrichtung zwischen der Abdichtvorrichtung (2) und der mindestens einen Rohrleitung (4) jeweils in sich selbst abgeschlossen sind,
die gummi-artige thermisch expandierbare Vorrichtung (3) umfasst Material, das eine Komponente aufweist, die das Material bei Exposition mit Wärme veranlasst, in einem Maße zu expandieren, das viel größer ist, als das Maß, in dem das Material, das diese Komponente nicht aufweist, expandieren würde, wobei die thermisch expandierbare Vorrichtung im montierten Zustand die mindestens eine Rohrleitung (4) an einer Position umgibt, die in einer axialen Richtung ist, relativ zu mindestens einer der mindestens einen Abdichtvorrichtung (2), an dem Ende oder in Richtung des Endes (6) des Rohrs.

2. Rohrleitungstransitsystem nach Anspruch 1, wobei die Vorrichtung zum Hindern einer Expansion der thermisch expandierbaren Vorrichtung (3) in einer axialen Richtung (L) nach außen relativ zu dem Rohr (1) eingerichtet ist.

3. Rohrleitungstransitsystem nach Anspruch 1 oder 2, wobei das Rohr (1) mit einem Halter zum Halten der thermisch expandierbaren Vorrichtung (3) in dem Rohr (1) ausgestattet ist.

4. Rohrleitungstransitsystem nach einem der Ansprüche 1, 2, oder 3, wobei in einem montierten Zustand der Vorrichtung heiße Luft oder Rauch in Lücken zwischen der inneren Wand (5) des Rohrs (1) und einer der mindestens einen thermisch expandierbaren Vorrichtung (3) und/oder in Lücken zwischen einer äußeren Wand der mindestens einen Rohrleitung (4) und einer der mindestens einen thermisch expandierbaren Vorrichtung (3) eindringen kann.

5. Rohrleitungssystem nach einem der vorstehenden Ansprüche, wobei in einem montierten Zustand der Vorrichtung Kontakt zwischen der inneren Wand (5) des Rohrs (1) und einer der mindestens einen thermisch expandierbaren Vorrichtung (3) und/oder zwischen einer äußeren Wand (7) der mindestens einen Rohrleitung (4) und einer der mindestens einen thermisch expandierbaren Vorrichtung (3) hergestellt ist.

6. Rohrleitungstransitsystem nach einem der vorstehenden Ansprüche, wobei die innere Wand (5) des Rohrs (1) mit mindestens einer Schulter (10) zum Hindern einer Bewegung in der axialen Richtung eines Endes von mindestens einer der Abdichtvorrichtungen ausgestattet ist.

7. Rohrleitungstransitsystem nach einem der vorstehenden Ansprüche, wobei bei axial aufgebrachtem Druck mindestens eine der Abdichtvorrichtungen elastisch in transversaler Richtung expandiert.

8. Rohrleitungstransitsystem nach einem der vorstehenden Ansprüche, wobei die innere Wand (5) des Rohrs (1) frei von einer Schwelle zwischen einem Teil des Rohrs (1) zum Halten von mindestens einer der thermisch expandierbaren Vorrichtungen (3) und einem Teil des Rohrs (1) zum Halten von mindestens einer Abdichtvorrichtung (2) ist.

9. Rohrleitungstransitsystem nach einem der vorstehenden Ansprüche, wobei das Rohr (1) aus einem Metall oder einem harten technischen Kunststoff ist, der nicht thermisch aufweichbar ist.

10. Rohrleitungstransitsytem nach einem der vorstehenden Ansprüche, wobei das Rohr (1) ein mehrteiliges Rohr ist, das mindestens einen Hauptteil (11) zum Halten der mindestens einen Abdichtvorrichtung (2) aufweist; und einen Hülsenteil (12), der an dem Hauptteil zum Halten einer der mindestens einen thermisch expandierbaren Vorrichtung (3) montierbar ist.

11. Rohrleitungstransitsystem nach Anspruch 10, wobei der Hülsenteil (12) zwei Schalen umfasst, die entlang einer axialen Richtung aneinander montierbar sind.

12. Rohrleitungstransitsystem nach Anspruch 10 oder 11, wobei ein Übergang von dem Hülsenteil (12) zu dem Hauptteil (11) frei von Durchmesser reduzierenden Strukturen ist.

13. Rohrleitungstransitsystem nach einem der vorstehenden Ansprüche, wobei jede Abdichtvorrichtung (2) in einer axialen Richtung benachbart einer anderen Abdichtvorrichtung (2) ist.

14. Rohrleitungstransitsystem nach einem der vorstehenden Ansprüche, wobei das Rohr (1) mindestens eine Sektion für mindestens eine Abdichtvorrichtung (2) und mindestens eine thermisch expandierbare Vorrichtung (3) definiert, wobei jede Sektion eine Länge aufweist, die den Längen der Summe von Längen der Anzahl von Abdichtvorrichtungen (2) entspricht, die in einem montierten Zustand die Sektion abdichten, und der Länge der Anzahl von thermisch expandierbaren Vorrichtungen (3), die in einem montierten Zustand in der Sektion gehalten werden.

15. Rohrleitungstransitsystem nach einem der vorstehenden Ansprüche, wobei die Vorrichtung derartig ist, dass sie in einem montierten symmetrisch sein kann, wobei eine imaginäre transversale Querschnittsebene des Rohrs (1) die Spiegelebene ist.

16. Rohrleitungstransitsystem nach Anspruch 10, wobei der Hülsenteil (12) einen thermisch schwächbaren Rohrleitungsteil zur Verlängerung einer Rohrleitung hält, die im montierten Zustand mittels der mindestens einen Abdichtvorrichtung (2) umgeben ist, wobei der thermisch schwächbare Rohrleitungsteil radial mittels einer der mindestens einen thermisch expandierbaren Vorrichtung (3) umgeben ist.

## Revendications

1. Système de transport de tuyaux comprenant :
un conduit (1) ayant une direction axiale (L) ;
au moins un dispositif d'étanchéité (2) qui peut être complètement inséré dans le conduit ; et
au moins un dispositif thermiquement expansible (3) de type caoutchouc, le conduit (1) étant approprié pour recevoir au moins un tuyau (4), le au moins un dispositif d'étanchéité (2) comprenant un bouchon en caoutchouc vulcanisé résistant au feu et étant approprié pour réaliser l'étanchéité dans une condition assemblée du système, entre une paroi interne (5) du conduit (1) et le au moins un tuyau (4), le au moins un des dispositifs d'étanchéité (2) est prévu avec des nervures externes (8) ayant des parties supérieures espacées dans la direction longitudinale pour réaliser, à l'usage, des surfaces de contact annulaires qui sont chacune fermées sur elles-mêmes dans une direction circonférentielle entre le dispositif d'étanchéité (2) et la paroi interne (5) du conduit (1), le au moins un des dispositifs d'étanchéité (2) est prévu avec des nervures internes ayant des parties supérieures espacées dans la direction longitudinale, pour réaliser, à l'usage, des surfaces de contact annulaires qui sont chacune fermées sur elles-mêmes dans une direction circonférentielle entre le dispositif d'étanchéité (2) et le au moins un tuyau (4),
le dispositif thermiquement expansible (3) de type caoutchouc comprend un matériau ayant un composant qui amène le matériau, suite à l'exposition à la chaleur, à se dilater sur une étendue qui est nettement supérieure à l'étendue à laquelle le matériau n'ayant pas ce composant se dilaterait, le dispositif thermiquement expansible entourant, dans la condition assemblée, le au moins un tuyau (4) dans une position qui est dans la direction axiale, par rapport à au moins un du au moins un dispositif d'étanchéité (2) au niveau de ou vers l'extrémité (6) du conduit.

2. Système de transport de tuyaux selon la revendication 1, dans lequel le système est configuré pour empêcher la dilatation du dispositif thermiquement expansible (3) dans une direction axiale (L) vers l'extérieur par rapport au conduit (1) .

3. Système de transport de tuyaux selon la revendication 1 ou 2, dans lequel le conduit (1) est prévu avec un dispositif de retenue pour retenir le dispositif thermiquement expansible (3) dans le conduit (1).

4. Système de transport de tuyaux selon la revendication 1, 2 ou 3, dans lequel, dans une condition assemblée du système, de l'air chaud ou de la fumée peut entrer dans des espaces entre la paroi interne (5) du conduit (1) et l'un parmi le au moins un dispositif thermiquement expansible (3) et/ou les espaces entre une paroi externe du au moins un tuyau (4) et celle du au moins un dispositif thermiquement expansible (3).

5. Système de transport de tuyaux selon l'une quelconque des revendications précédentes, dans lequel, dans une condition assemblée du système, le contact est établi entre la paroi interne (5) du conduit (1) et celle du au moins un dispositif thermiquement expansible (3) et/ou entre une paroi interne (7) du au moins un tuyau (4) et celle du au moins un dispositif thermiquement expansible (3).

6. Système de transport de tuyaux selon l'une quelconque des revendications précédentes, dans lequel la paroi interne (5) du conduit (1) est prévue avec au moins un épaulement (10) pour empêcher le mouvement dans la direction axiale d'une extrémité d'au moins un des dispositifs d'étanchéité.

7. Système de transport de tuyaux selon l'une quelconque des revendications précédentes, dans lequel au moins un des dispositifs d'étanchéité se dilate élastiquement dans la direction transversale suite à une pression appliquée de manière axiale.

8. Système de transport de tuyaux selon l'une quelconque des revendications précédentes, dans lequel la paroi interne (5) du conduit (1) est dépourvue de seuil entre une partie du conduit (1) pour supporter au moins un des dispositifs thermiquement expansibles (3) et une partie du conduit (1) pour supporter au moins un dispositif d'étanchéité (2).

9. Système de transport de tuyaux selon l'une quelconque des revendications précédentes, dans lequel le conduit (1) est réalisé à partir de métal ou d'un plastique industriel dur qui ne peut pas être thermiquement ramolli.

10. Système de transport de tuyaux selon l'une quelconque des revendications précédentes, dans lequel le conduit (1) est un conduit en plusieurs parties, ayant au moins une partie principale (11) pour supporter le au moins un dispositif d'étanchéité (2) ; et une partie de manchon (12) qui peut être montée sur la partie principale pour supporter l'un du au moins un dispositif thermiquement expansible (3).

11. Système de transport de tuyaux selon la revendication 10, dans lequel la partie de manchon (12) comprend deux coques qui sont longues le long d'une direction axiale, pouvant être montées l'une par rapport à l'autre.

12. Système de transport de tuyaux selon la revendication 10 ou 11, dans lequel une transition de la partie de manchon (12) à la partie principale (11) est dépourvue de structures de réduction de diamètre.

13. Système de transport de tuyaux selon l'une quelconque des revendications précédentes, dans lequel chaque dispositif d'étanchéité (2) est adjacent à un autre dispositif d'étanchéité (2), dans la direction axiale.

14. Système de transport de tuyaux selon l'une quelconque des revendications précédentes, dans lequel le conduit (1) définit au moins une section pour au moins un dispositif d'étanchéité (2) et au moins un dispositif thermiquement expansible (3), chaque section ayant une longueur qui correspond aux longueurs de la somme des longueurs du nombre de dispositifs d'étanchéité (2) qui sont dans une condition assemblée scellant cette section et la longueur du nombre de dispositifs thermiquement expansibles (3) qui sont maintenus dans cette section, dans une condition assemblée.

15. Système de transport de tuyaux selon l'une quelconque des revendications précédentes, dans lequel le système est tel qu'il peut être symétrique, dans la condition assemblée, un plan transversal imaginaire du conduit (1) étant le plan en miroir.

16. Système de transport de tuyaux selon la revendication 10, dans lequel la partie de manchon (12) maintient la partie de tuyau thermiquement affaiblie pour l'extension d'un tuyau qui est, dans la condition assemblée, entouré par le au moins un dispositif d'étanchéité (2), la partie de tuyau thermiquement affaiblie étant radialement entourée par l'un du au moins un dispositif thermiquement expansible (3).
